**Europäisches Patentamt**

**European Patent Office**

**Office européen des brevets**

(19)

(11) Publication number: **0 040 185**
**A1**

(12) # EUROPEAN PATENT APPLICATION

(21) Application number: **81850072.0**

(22) Date of filing: **21.04.81**

(51) Int. Cl.³: **A 01 D 37/04**

(30) Priority: **18.04.80 SE 8002944**

(43) Date of publication of application:
**18.11.81 Bulletin 81/46**

(84) Designated Contracting States:
**DE FR GB IT NL SE**

(71) Applicant: **Ergonomi Design Gruppen AB**
**Box 14021**
**S-161 14 Bromma 14(SE)**

(71) Applicant: **Tullinge Teknik HB**
**Skogshemsvägen 14**
**S-146 00 Tullinge(SE)**

(72) Inventor: **Crafoord, Carl-Göran**
**Sigurdsvägen 17**
**S-182 64 Djursholm(SE)**

(72) Inventor: **Granlind, Ingmar**
**Skogshemsvägen 14**
**S-146 00 Tullinge(SE)**

(74) Representative: **Säfwenberg, Björn**
**Axel Ehrners Patentbyra AB Smalandsgatan 2**
**S-114 34 Stockholm(SE)**

(54) **Aggregate for harvesting and bundling plants.**

(57) The invention provides a unit for cutting and bundling plants. The unit is mounted on or intended to be connected to a vehicle (1) and comprises foremost mounted cutting means (10), e.g. in the form of saw blades (13,14), thereafter transport means, e.g. in the form of belt conveyors (16,17) being arranged to pass cut-off plants backwards and simultaneously upwards, thereafter accumulating means (11) being arranged to receive plants from the conveyors and finally bundling means (12) being arranged next to the accumulating means to bundle plant bunches accumulated therein. An intermediate storage may be arranged before the accumulating means to temporarily store plants during periods when the accumulating means are filled or being emptied. The intermediate storage includes a stopping device (108) introduceable into the plant flow from the side.

./...

FIG. 1

# UNIT FOR CUTTING AND BUNDLING PLANTS

The present invention relates to a unit for cutting and bundling plants such as species of salix cultivated for e.g. energy recovery, and sugar-canes.

When cultivation of e.g. species of salix in so called energy forest cultivations is carried out in relatively narrow rows and the plants with the usually comparatively short period of growth become slender-stemmed but often richly branched, mass-handling must be applied for harvesting and transporting to achieve a rational operation. Hitherto, the most common method is to gather the plants after the cutting into bunches, which are bundled by means of a band or a string being put around the bunches.

Sugar-canes are cultivated in a way similar to that of energy forest. Harvesting takes place continuously all year around and the period of growth is between one and two years. Harvesting of sugar-canes is made almost completely manually. This is very hard work and the working environment is quite unacceptable. Stems and leaves are very sharp resulting in serious cutting wounds when handled manually. The warm and humid climate where sugar-canes are cultivated does not permit adequate protective clothing.

An object of the invention is to provide a unit for cutting and bundling plants which is mounted on or intended to be connected to a vehicle and comprises cutting means, accumulating means for cut-off plants and bundling means. The unit shall be arranged so that the driver is very little influenced by its operation. In particular - when two units are mounted in front of the vehicle - the driver´s sight straight ahead shall be free. These objects have been achieved by the present invention, having the characteristics stated in the following claims.

0040185

The invention will be described further below with reference to the attached drawings, wherein

Figs 1 and 2 show a side view and a top view, respectively, of a double unit according to the invention mounted on a tractor;

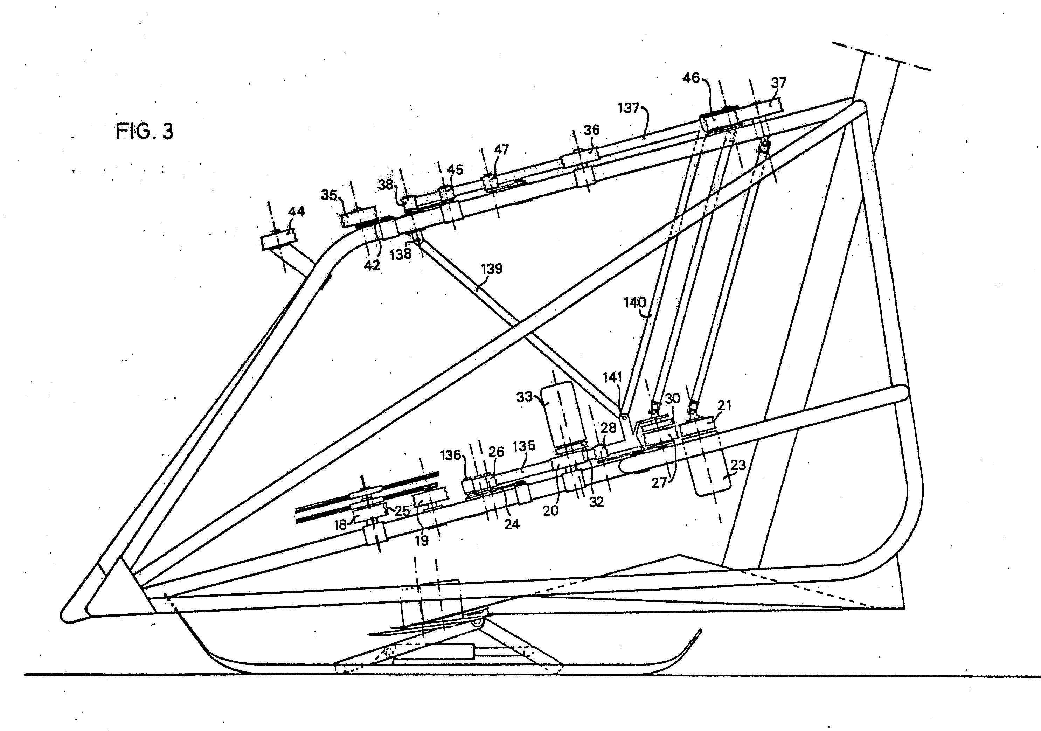

Fig. 3 shows a side view corresponding to the one shown in fig. 1 but without conveyor belts;

Fig. 4 shows from above the right lower belt conveyor seen at right angle to the inclined conveying plane;

Fig. 5 correspondingly shows the upper right belt conveyor;

Figs 6, 7 and 8 show a front, side and top view, respectively, of two posts with details mounted thereon; and

Fig. 9 shows a side view of the function of the discharge means.

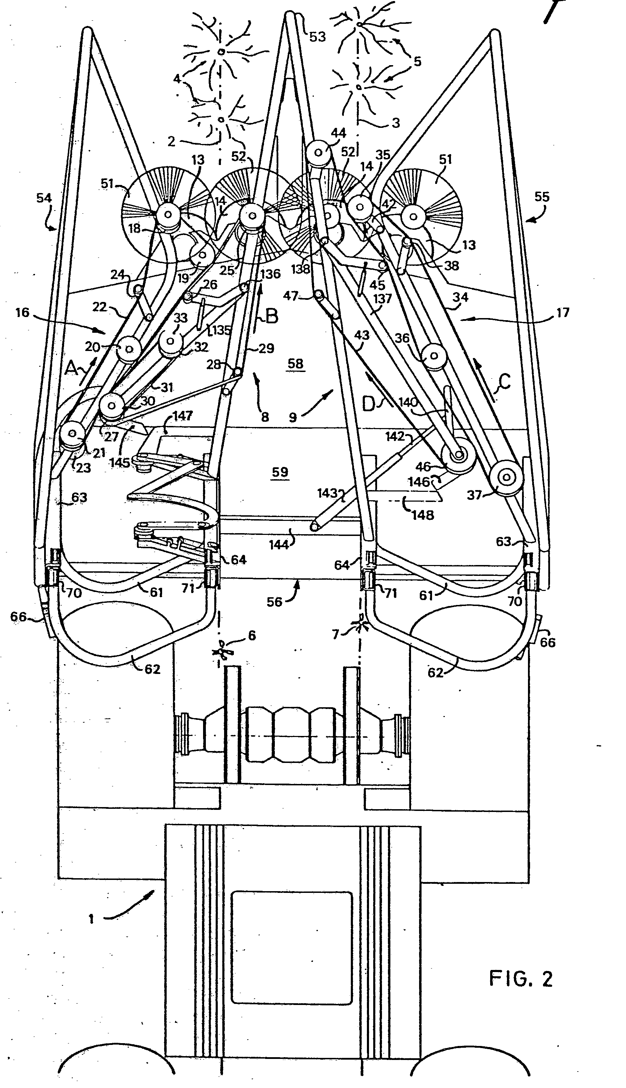

The unit according to the invention can exist as a double unit intended for frontal mounting (fig. 2) or as a single unit, which then substantially consists of the right or the left half of a double unit and preferably is intended to be mounted on the side of a vehicle.

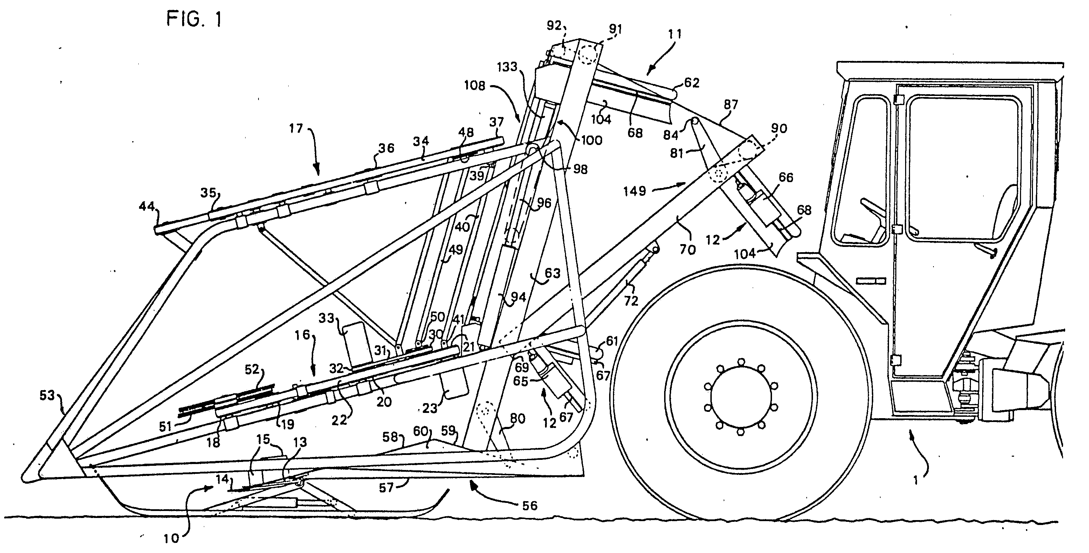

The double unit shown in figs 1 and 2 is mounted, in a manner not shown in detail, at the front of a tractor 1. The tractor in the embodiment shown has such a track width that it straddles two rows 2 and 3 of growing plants 4 and 5, respectively, as well as stubs 6 and 7, respectively, remaining after the cutting.

The shown double unit consists of a left unit 8 and a right unit 9 being each others reflected images. Each such single unit comprises cutting means 10, accumulating means 11 and bundling means 12 (fig. 1).

In the shown embodiment the cutting means 10 of each single unit 8, 9 consists of, relative to the center line of the double unit, an outer saw blade 13 and an inner saw blade 14 for the left and right row of plants. The saw blades are preferably driven by hydraulic motors 15.

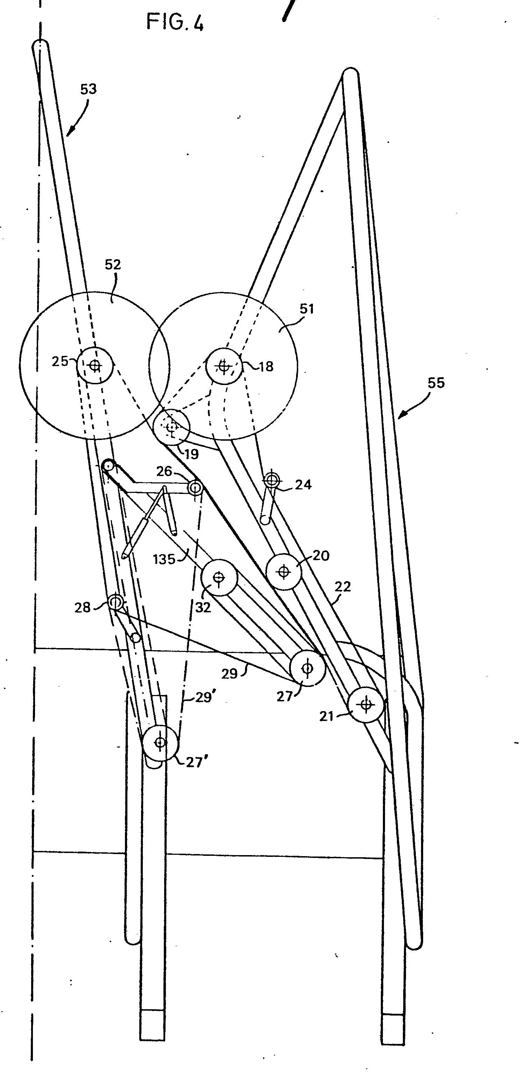

Above each pair of saw blades 13, 14 is mounted a conveyor device consisting of a lower belt conveyor 16 and an upper belt conveyor 17 adapted to pass cut-off plants obliquely backwards/outwards up to the accumulating means 11. For the sake of clarity, fig. 2 shows only the lower belt conveyor 16 of the left single unit 8 and only the upper belt conveyor 17 of the right single unit 9. Each lower conveyor 16 (see also fig. 4) consists of an outer endless belt 22 put around four rollers 18, 19, 20 and 21. The roller 21 is driveable by a hydraulic motor 23, such that the belt 22 is moveable in the direction of the arrow A. From the foremost and outer roller 18 the belt 22 extends obliquely inwards/backwards to the roller 19 located in the area above the blades 13, 14. From the roller 19 the belt 22 then leads obliquely outwards/ backwards via the roller 20 to the driveable roller 21 and therefrom again up to the roller 18. Between the roller 21 and the roller 18 there is a belt tightener 24.

Each lower conveyor 16 also consists of an inner endless belt 29 put around four rollers 25, 26, 27 and 28. The roller 26 has the function of increasing the clamping force between the belts and the roller 28 has a belt tightening function. On the same shaft as the roller 27 is mounted another roller 30 around which an endless belt 31 is provided, which is also put around a roller 32 driveable by a hydraulic motor 33. By means of the hydraulic motor 33 the belt 29, via the belt 31, is driveable in the direction of the arrow B. As is shown in fig. 2 the belt 29 is in contact with the belt 22 from the roller 19 to the roller 30 why the belt directions A and B coincide between these rollers. The speed of the belt 22 in the direction A is equal to the speed of the belt 29 in direction B.

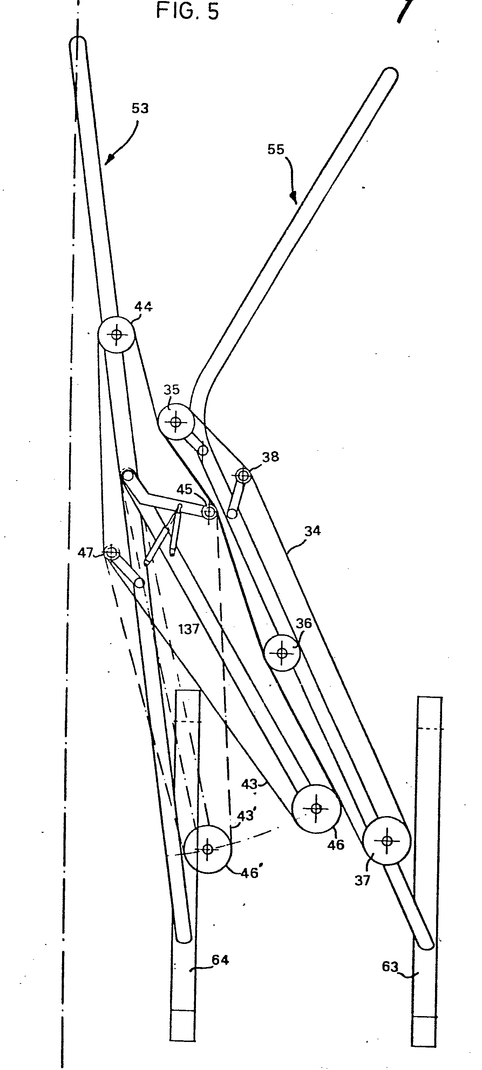

Each upper conveyor 17 (figs 2 and 5) consists of an outer, endless belt 34 being put around four rollers 35, 36, 37 and 38, of which the roller 38 has a belt tightening function. The shaft of the roller 37, via a universal joint 39 (fig. 1), a shaft 40 and another universal joint 41 is connected to the shaft of the roller 21 of the outer belt 22 of the lower conveyor 16, so that also the belt 34 is driveable by the hydraulic motor 23 in the direction of the arrow C. The roller 35 is mounted to a pivotable, inwardly spring loaded arm 42.

Each upper conveyor 17 also consists of an inner, endless belt 43 being put around four rollers 44, 45, 46 and 47, of which the roller 45 has the function of increasing the clamping force between the belts, and the roller 47 has a belt tightening function. The shaft of the roller 46 is, via a universal joint 48, a shaft 49 and another universal joint 50 connected to the shaft of the roller 30 of the inner belt 29 of the lower conveyor 16, so that also the belt 43 is driveable by the hydraulic motor 33 in the direction of the arrow D. As appears from fig. 2 the belt 43 contacts the belt 34 from the roller 35 to the roller 46, why the belt directions C and D coincide between these rollers. The speed of the belt 34 in the direction C equals the speed of the belt 43 in the direction D.

As is shown in fig. 2 the rollers 37 and 45 of the upper conveyor 17 have a larger diameter than the corresponding rollers 21 and 27 of the lower conveyor 16, whereby the upper belts 34 and 43 are given a speed correspondingly higher in the directions C and D than the speeds of the belts 22 and 29 in the directions A and B.

On the shaft of the rollers 18 and 25, respectively, of the lower belts 22 and 29 may be mounted disc-shaped, circular brushes 51 and 52, respectively, which are driveable in opposite rotational directions A' and B' by the respective belts.

The conveyors 16 and 17 are mounted on a frame structure of tubes, which in the double unit embodiment shown has a central portion 53 and side portions 54 and 55. The central portion 53, which, seen from above, is wedge-shaped with the tip pointing forwards (fig. 2), carries the inner rollers and belts of the conveyors. The side portions 54 and 55 of the frame, which, seen from above, are substantially triangular with the longer side of the triangle turned outwards and two shorter triangle sides turned inwards, carry the outer rollers and belts of the conveyors.

The front shorter triangle side portions are directed such that they form, together with the respective side of the central frame portion 53, a backwardly tapered plant inlet directed towards the blades 13 and 14. The central portion 53 of the frame as well as its side portions 54 and 55 are also shaped to that they, when the unit is moved, comb between the plant rows, thereby separating branches and stems from different rows, which may have grown together. This combing is initiated at ground level (fig. 1).

The frame 53, 54, 55 is in turn mounted on a box type frame member 56, which, seen from the side (fig. 1), has a substantially triangular cross section with a bottom plate 57, a front upwardly/backwardly inclining plane plate 58 and a rear plane plate 59 inclining downwardly/backwardly. Vertical side plates 60 complete the box type structure. The frame member 56 which also carries the saw blades 13 and 14 as well as their driving motors, is connected to the tractor 1 in a manner not shown.

When moving the unit along the plant rows 2 and 3 the rotating brushes 51 and 52 primarily get in contact with the plants. As appears from figs 1 and 2 the rollers 35 of the upper belt conveyors are located in front of the roller 19 of the lower belt conveyors. Thus, the upper parts of the plants are gripped between the belts 34 and 43 of the upper conveyors in the nip between the roller 35 and the belt 43 just before they reach in between the blades 13, 14 and are cut off. This results in that the tops of the plants are being drawn backwards and that the just cut-off plants are given an inclination backwards before they are gripped between the belts 22 and 29 of the lower conveyors in the nip between the roller 19 and the belt 29.

As appears in fig. 1 the planes of the lower and upper conveyors are mutually parallel and directed obliquely upwards/backwards as well as parallel to the plate 58 of the frame member. The cut-off plants, thus, will be brought obliquely backwards/upwards hanging between the belts 22, 29 and 34, 43 with the cut end portions along the plate 58. As appears from fig. 2 the conveyors are directed obliquely backwards/outwards at the same time.

As further appears from figs 1 and 2 the operative area of the upper conveyors is extended further back than that of the lower conveyors, i.e. completely in correspondence with the inclination of the plants. This inclination also corresponds to the inclination of the shafts 40 and 49. Thus, the conveyors release the plants still having av backward inclination. This is done in the area above the junction between the plates 58 and 59.

Here the plants are passed over to the accumulating means 11. Each such means consists of lower and upper support bows 61 and 62, substantially bent to U-shape, the forward directed legs of which are connected to each one of two parallel posts 63 and 64, having the same inclination backwards as the aforementioned. The posts 63 and 64 are fixedly mounted to the plate 59 of the frame member 56, substantially at right angle thereto. The inner posts 64 are also connected to the central frame portion 53, while the outer posts 63 are connected to the side portions 54 and 55 of the frame structure.

In the accumulating means 11 the plants delivered from the conveyors are left standing on the plate 59 leaning backwards against the bows 61 and 62.

During the continued movement of the unit along the plant rows the accumulating means 11 are successively filled with cut-off plants. When an accumulating means is filled two bands are put around the accumulated bunch. This is done by the bundling means 12. These comprise a band apparatus 65 and 66, respectively, under each bow 61, 62, which preferably is pneumatically operated and is arranged to pass a band along a non-shown band guide 67 and 68, respectively, and around the lower and upper portions respectively, of the bunch, pull the band and tie it or - if the band is of a thermo-plastic material - heat-seal it.

When such an operation is finished the accumulating means should be emptied. For this purpose each accumulating means is provided with discharge means 149.

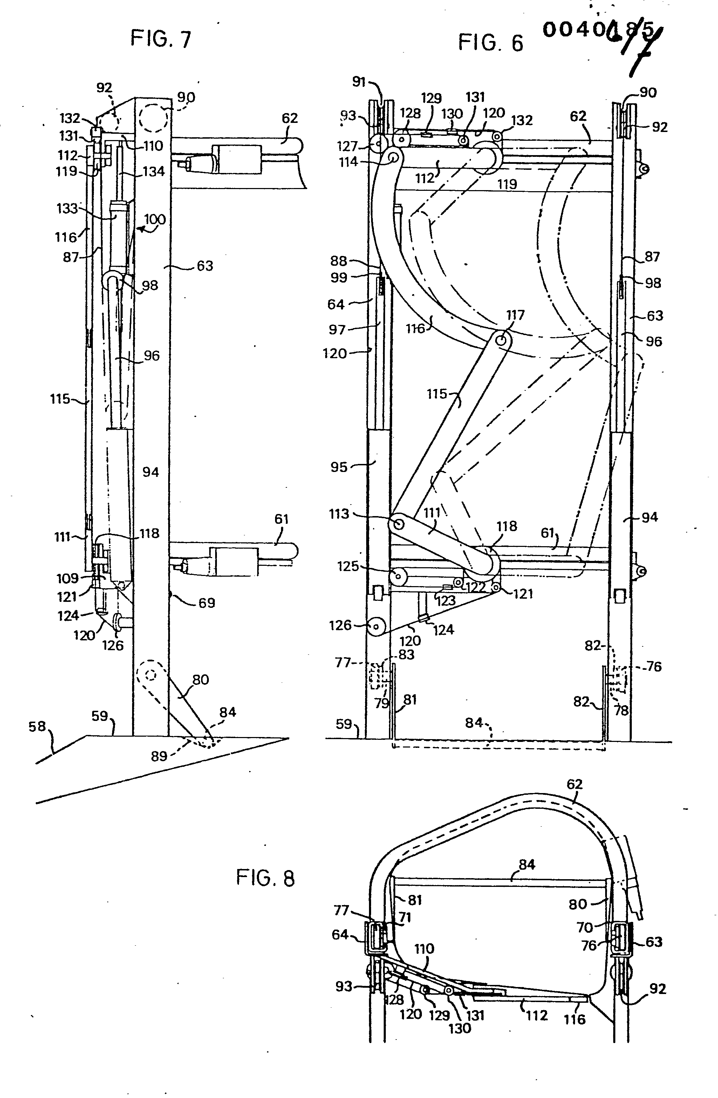

The posts 63 and 64 have an L-profile open towards each other and backwardly (figs 2 and 8). At a distance above the plate 59 are mounted fellable guides 70 and 71, respectively, which are backwardly pivotably mounted around a pivot axle 69 on each post 63 and 64. These guides, having substantially U- or Ω-shaped profiles open towards each other (fig. 8), carry the support bows 61 and 62 (figs 1, 8 and 9; fig. 1 shows the right guides in an upright position inside the posts and the left guides in a backwardly lowered position). The pivoting movement is achieved by means of hydraulic cylinders 72 and 73, respectively.

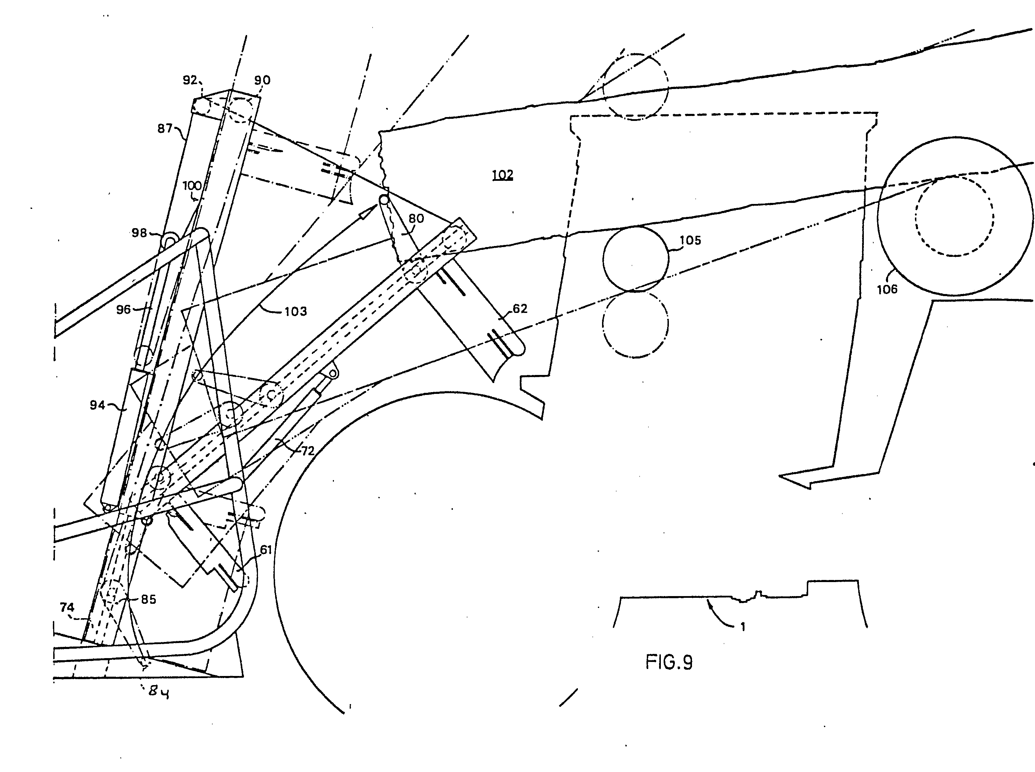

Fixed guides 74 and 75 (fig. 9), respectively, are mounted on the inside of the L-shaped profiles of the posts 63 and 64, which guides extend from the plate 59 to the pivot axle 69 of the pivotable guides 70 and 71, respectively, and have the same profile as the latter. Inside each one of the guiding channels formed by a fixed and a pivotable guide 74, 70 and 75, 71, respectively, is arranged a guiding wheel 76 and 77, respectively, being freely rotatably mounted on one end of a shaft 78 and 79, respectively. An arm 80 and 81, respectively, is fixedly arranged on the other end of the axis. Between the guiding wheel and the arm a pulley 82 and 83, respectively, (fig. 8) is fixedly connected to the shaft. A lifting rod 84 connects the free end portions of the two arms 80 and 81.

When the accumulating means are being filled the discharge means is in a stand-by position meaning that the pivotable guides 70 and 71 have the upright position according to fig. 1, where they are located inside the posts 63 and 64, respectively. The pivotable guides 70 and 71 of the left side are shown in this position in fig. 1. In the stand-by position also the arms 80 and 81 as well as the lifting rod 84 connecting same have the position shown in figs 1, 6 and 7. The lifting rod 84 is then located in a recess 89 in the plate 59 having inclined sides.

At a location 85 and 86, respectively, of the periphery of the pulley 82 and 83, respectively, one end of a wire 87 and 88, respectively, is secured. In the stand-by position according to fig. 1 said wire extends upwards along the front periphery of the respective pulley 82, 83 and thereafter up through the guiding channels of the fixed and pivotable guides 74, 70 and 75, 71, respectively, to pulleys 90 and 91, respectively, provided at the top of the pivotable guides. From here the wire leads to pulleys 92 and 93, respectively, provided at the front of the top of each post 63 and 64, respectively. Hydraulic cylinders 94 and 95, respectively, are mounted on the front side of the posts 63 and 64, respectively, the piston rods 96 and 97, respectively, of the cylinders being turned upwards and the free ends thereof being provided with a pulley 98 and 99, respectively. From the pulleys 92 and 93, respectively, the wires 87 and 88, respectively, are lead around the pulleys 98 and 99, respectively, and finally extend up along the posts 63 and 64, respectively, to which they are secured at 100 and 101 (fig. 7), respectively.

In the stand-by position the piston rods 96 and 97 have the completely pushed-out position shown in figs 6 and 7 and in fig. 1 with solid lines. As mentioned above the arms 80 and 81 as well as the lifting rod 84 connecting the same then have the position also appearing from the afore-mentioned figures. When an accumulating means is filled with cut-off plants and these are bundled the lifting rod 84 shall be located in the extension of the longitudinal axis of the substantially cylindrical bundle, i.e. the lifting rod 84 should extend diametrically over the substantially circular lower end portion of the bundle.

When emptying an accumulating means, the arms 80 and 81 are lifted and with them the lifting rod 84 along the posts 63 and 64 by the fact that the wires 87 and 88 are pulled upwards through the fixed and the upright, pivotable guides 74, 70 and 75, 71, respectively. The pulling of the wires 87 and 88 can be achieved either by the piston rods 96 and 97 being pulled into the cylinders 94 and 95 or by the pivotable guides 70 and 71 being pivoted backwards by the cylinders 72 and 73, or by these operations taking place simultaneously. However, it is preferred that the discharge is initiated by lowering the pivotable guides, which due to the described arrangement .of the wires 87 and 88 results in a slower movement of the wires than the influence from the cylinders 94 and 95.

In fig. 9 the discharge is shown step by step, the initial position of the arms 80, 81, the lifting rod 84 and a bundle 102 being illustrated by dash dotted lines with one dot, three intermediate positions with dash dotted lines with two, three and four dots, respectively, as well as their end position with solid lines.

Starting from the previously mentioned stand-by or initial position, firstly the lowering of the pivotable guides 70, 71 from the upright position inside the posts 63 and 64 to the position shown in fig. 9 with solid lines is initiated. As the piston rods 96, 97 of the cylinders 94, 95 in the initial position are completely pushed-out, this lowering movement means that the wires 87, 88, at least in the initial stage, move upwards in the fixed guides 74, 75 at the same speed as the lowering speed at the upper periphery of the pulleys 90, 91, i.e. where the wires 87, 88 leave these pulleys.

As is understood by the described arrangement of the wires 87, 88 around the pulleys 82, 83 the arms 80, 81 are subject to a torque in clockwise direction when pulling the wires. Also the substantially greater torque from the bundle 102 resting on the lifting rod 84 acts in the same direction. Thus, the lower portion of the bundle 102 - as soon as the lifting rod 84 has left the recess 89 - will start moving towards the left in fig. 9 during simultaneous raising. The movement of the lifting rod 84 and thereby of the lower end portion of the bundle 102 is shown with an arrow 103. This means that the bundle already in the initial stage looses its contact with the bow 61 against which it earlier was supported, but that it still is supported and slides against the bow 62. To facilitate this sliding the bow 62 is provided with a funnel-like, downwardly directed guiding plate 104.

In the first intermediate position marked with dash dotted lines with two dots, the torque from the bundle on the arms

80, 81 has practically ceased and the guiding wheels 76, 77 of the arms have just shifted into the guiding channels of the pivotable guides 70, 71, which, however, are not shown in this position. Depending on the height of the bundle 102 the position of the center of gravity of the bundle begins to take effect somewhere between the first and the third intermediate position (four dots), in which the pivotable guides have reached their end position, i.e. the bundle shows a tendency to tilt over the bow 62. However, in the beginning the lifting rod 84 counteracts such a tilting - despite the torque from the pulling of the wires 87, 88 - as the rod engages between the stems in the relatively uneven bundle-end.

In the third intermediate position the cylinders 94 and 95 take over the pulling of the wires 87 and 88. This pulling, due to the wire arrangement at the pulleys 98, 99 of the piston rods 96, 97, is performed at the double piston speed, and, due to the now quite considerable inclination of the bundle, the bundle-end is influenced more by a backward movement than by a lifting movement. At high piston speed this movement could be given the characteristics of a throwing movement.

The bundle 102 could now be permitted to fall freely to the ground. In such a case the lifting rod would let go of its engagement in the bundle-end before the end position shown with solid lines and the bundle would continuously be supported by the bow 62.

Should it, however, be desireable to load the bundle onto a wagon connected behind the tractor 1 a spring loaded supporting roller 105 can be mounted on the tractor. This supporting roller 105 then takes over the supporting function of the bow 62 about in the third intermediate position and, together with a driven roller 106 mounted further back on the tractor, prevents the bundle from tilting. The lower, now front end portion of the bundle is successively lifted from the bow
62 and the bundle is brought backwards by the lifting rod 84 as
well as the driven roller 106.

As the unit has now been described it is understood that the
unit must be stopped while the bunches are bundled and the
accumulating means are emptied. Otherwise cut-off plants
would continue to be fed into the accumulating means which
then, however, would not be able to receive new plants. In
order to avoid such an intermittent operation of the unit an
intermediate storage 107 is arranged before the respective
accumulating means 11, in which storage the flow of cut-off
plants is stopped and the plants are accumulated during periods
when an accumulating means is unable to receive plants.

In order to stop the flow of plants each inner post 64 is
provided with a stopping device 108 which in an active position stops the plant flow. On the inner post 64 a lower and
an upper arm 109 and 110, respectively, are fixedly mounted,
which arms extend obliquely forwards/outwards somewhat less
than half the distance to the outer post 63 (figs 2, 6, 7, 8).
At the ends of the fixed arms 109, 110 pivotable arms 111 and
112, respectively, are mounted, which arms are pivotably
connected at 113 and 114, respectively, to one intermediate
arm 115 and 116, respectively, each which in turn are mutually pivotably connected at 117 (fig. 6). The arms 111 and 112
are pivotable by one pulley 118 and 119, respectively, each,
of which the lower pulley 118 has a diameter somewhat larger
than the upper pulley 119. From the initial position shown
in fig. 6 with solid lines, the stopping device can be
brought via the intermediate position shown with dash dotted
lines with one dot to the end position shown with dash dotted
lines with two dots, and backwards. These movements are achieved
via a wire 120 being put in a loop around the two pulleys 118
and 119 as well as around several intermediate pulleys 121-
132. At the front of the post 64 is secured a hydraulic cylin-

der 133, in the end portions of the through-piston rod 134 of which are fixed the ends of the wire 120. As the piston rod 134 is brought downwards from the position shown in fig. 7, the arms 111 and 112 according to fig. 6 perform a clockwise and counter-clockwise, respectively, movement and with them the arms 115 and 116 according to the shown pattern move towards the right in fig. 6. It is to be noticed that the acute angle formed by the arms 115 and 116 in the joint 117 already in the initial position, wherein the joint is located substantially in line with the pivotally mounted ends of the arms 111 and 112, at the beginning becomes even more acute (see the intermediate position shown with dash dotted lines with one dot in fig. 6) while the joint 117 moves substantially straight out towards the right in fig. 6. The purpose of this is to enable the arms 115 and 116 to penetrate substantially at one spot between plant stems moving backwards towards the accumulating means. When the point between the arms 115 and 116 has penetrated the entire plant flow, i.e. to the area in front of and even somewhat outside the post 63, the angle between the arms 115 and 116 increases such that from the joint 117 the arms comb downwards and upwards, respectively, between the plants located in front of and behind the stopping device in order to effectively separate these from each other. The flow from the conveyors, thus, is now stopped by the arms 111, 115, 116 and 112 in the end position shown with dash dotted lines with two dots in fig. 6, whereafter the plants located in the accumulating means undisturbedly can be bundled and the accumulating means be emptied. As is shown in fig. 6 the arm 112 has turned 180$^{\circ}$ in the end position, whereas the pivot angle of the arm 111 is somewhat smaller.

As the flow of plants is obstructed by the stopping device 108 an accumulation of plants will take place in front of the stopping device as well as between the lower conveyor belts 22 and 29 and the upper conveyor belts 34 and 43. In order to provide space for this accumulation the rear roller 27 of the inner belt 29 of the lower conveyor 16 is mounted pivotally inwardly towards the position 27' in fig. 4, i.e. away from the outer belt 22. Likewise, the rear roller 46 of the inner belt 43 of the upper conveyor 17 is mounted pivotally inwardly towards the position 46' in fig. 5, i.e. away from the outer belt 34.

This angular adjustment has been achieved by the roller 27 - together with the drive motor 33 - being mounted on an arm 135 being pivotally mounted at a point 136 on the central portion 53 of the frame, and by the roller 46 being mounted on an arm 137 being pivotally mounted at a point 138 on the central portion 53 of the frame. The points 136 and 138 are located on a common pivot axle. The arms 135 and 157 are connected by two rods 139 and 140, which both engage in the arm 135 in one and the same point 141 at some distance from the roller 27, while the rod 139 engages in the arm 137 in the pivoting point 138 and the rod 140 engages in the arm 137 at some distance from the roller 46. By this arrangement the rod 139 is tensioned or drawn, i.e. the free end of the lower pivotable arm is hanging in the rod 139, while the rod 140 is being pressed, i.e. the free end of the upper pivotable arm 137 is supported by the rod 140.

Against the rod 140 acts the piston rod 142 of a pneumatic cylinder 143, the opposite end of which rod is pivotally mounted in a girder 144 connecting the two inner posts 64. The cylinder 143 partly serves to give the arms 135 and 137 an adequat, resilient resistance against pivoting, i.e. to press the belts 22 and 29 as well as 34 and 43 towards each other, and partly to return the arms to the position shown in fig. 2 where the intermediate storage is emptied by the stopping device 108 being returned to its initial position.

In order to prevent plants leaving the conveyors to fall back forwards and land up in the space between the pivotable lower and upper arms 135 and 137, respectively, and the central portion 53 of the frame, the arms 135 and 137 are provided with baffle plates 145 and 146, respectively, directed inwards towards this space, which baffle plates cooperate with, and, in the pivoted positions of the arms when the intermediate storage is filled, more or less overlap fixed baffle plates 147 and 148, respectively, provided at the inner posts 64.

The central portion 53 of the frame is carried by a ski 150 by means of legs 151, 152 and a cylinder 153, by which arrangement the height of the unit above ground level can be regulated.

## C L A I M S

1. Unit för cutting and bundling plants (5,6), which is mounted on or intended to be connected to a vehicle (1) and comprises cutting means (10), accumulating means (11) for cut-off plants and bundling means (12), wherein the cutting means (10) are arranged foremost counted in the direction of movement of the unit when cutting, and wherein, in connection to the cutting means (10), are arranged transport means (16,17) for cut-off plants, said transport means being adapted to pass cut-off plants from the cutting means (10) to the accumulating means (11), c h a r a c t e r i z e d   i n
that the transport means (16,17) are arranged to transport
    cut-off plants backwards, preferably obliquely backwards,
    relative to the direction of movement of the unit,
that the accumulating means (11) comprise a bottom (59) being
    arranged to carry the end portions of plants delivered
    by the transport means, and means (61,62) for supporting
    the plants,
that the bundling means (12) are adapted to bundle plants
    accumulated by the accumulating means (59,61,62) and
that an intermediate storage (107) is arranged before the accumulating means (11), said storage being adapted to accumulate several cut-off plants before these are delivered to
    the accumulating means (59,61,62).

2. Unit according to claim 1, c h a r a c t e r i z e d
i n   that the transport means (16,17) are arranged to raise
the cut-off plants from the level of the cutting means (10)
to at least the level of the bottom (59) of the accumulating
means during the backwards transport.

3. Unit according to anyone of claims 1 and 2, c h a r a c -
t e r i z e d   i n   that the intermediate storage (107) is arranged to temporarily obstruct the continuous flow of plants transported by the transport means (16,17) during periods when the accumulating means (59,61,62) are filled or being emptied.

4.   Unit according to anyone of claims 1-3, wherein the transport means are belt conveyors having endless belts (22,29, 34,43) running parallel and close to each other in the direction of transportation and being placed around one roller (21, 27,37,46) each in the area of the accumulating means (11), c h a r a c t e r i z e d   b y   a stopping device (108) introduceable in the flow of cut-off plants transported by the belt conveyors, which stopping device is arranged to obstruct the flow of plants before these reach the accumulating means, one roller (27,46) of each conveyor being movably mounted in relation to the other (21,37), so that due to the pressure of plants on the belts being increased by the accumulation of plants against the stopping device (108) the first mentioned roller (27,46) is brought away from the other (21,37), whereby an increased space is formed between the belts (22 and 29, 34 and 43) and the stopping device (108) for plants transported by the conveyor.

5.   Unit according to claim 4, c h a r a c t e r i z e d i n   that the stopping device (108) is arranged to be introduced from the side with a point (117) (fig. 6) between the plants in the plant flow.

6.   Unit according to claim 5, c h a r a c t e r i z e d i n   that the stopping device (108) includes pivotally connected arms (115,116) being arranged to be introduced into the plant flow at a relative angle and with the joint (117) joining the arms leading.

7. Unit according to claim 6, c h a r a c t e r i z e d
i n  that the two arms (115,116) are pivotally connected to
one swingable arm (111,112) each, which are simultaneously
driveable to introduce at least the two first mentioned arms
(115,116) into the plant flow and thereafter to increase
the angle between these arms.

8. Unit according to anyone of the preceding claims,
c h a r a c t e r i z e d   i n  that the means (61,62) for
supporting the plants inclines backwards relative to the
direction of movement of the unit.

9. Unit according to anyone of claims 1-8, c h a r a c -
t e r i z e d   i n  that the bundling means (12) are
arranged at the accumulating means and adapted to bundle plants
accumulated by the accumulating means.

10. Unit according to claim 9, c h a r a c t e r i z e d
i n  that the means for supporting the plants are bows (61,
62) being open to the front and substantially U-shaped, which
bows carry one bundling means (65,66) each.

FIG. 1

CO40185 1/4

FIG. 2

FIG. 3

0040185

FIG. 4

4/4

0040185

FIG. 5

FIG. 7

FIG. 6

FIG. 8

FIG.9

# EUROPEAN SEARCH REPORT

European Patent
Office

EP 81 85 0072.0

## DOCUMENTS CONSIDERED TO BE RELEVANT

| Category | Citation of document with indication, where appropriate, of relevant passages | Relevant to claim |
|---|---|---|
| | US – A – 4 135 350 (HIROKAZU MIYATAKE) <br> * column 1, lines 16 to 30; fig. 1, 2 * | 1,2,4,9 |
| | DE – C – 45 877 (LA VERNE W. NOYES) <br> * entire document * | 1-3,9 |
| | DE – C – 913 712 (K. WIESSELL) <br> * page 1, line 35 to page 2, <br> line 26; fig. 1 * | 1 |
| A | DE – B – 1 582 276 (KUBOTA TEKKO K.K.) <br> & US – A – 3 531 921 | |

**CLASSIFICATION OF THE APPLICATION (Int. Cl.³)**

A 01 D 37/04

**TECHNICAL FIELDS SEARCHED (Int. Cl.³)**

A 01 D 37/00

A 01 D 39/00

A 01 D 45/10

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 07-07-1981 | SCHOFER |

EPO Form 1503.1 06.78